# NOUVEAU FASCICULE DE BREVET EUROPEEN

(11) **EP 0 512 925 B2**
(45) Date de publication et mention de la décision concernant l'opposition: **02.11.2000**
(45) Mention de la délivrance du brevet: 17.07.1996
(21) Numéro de dépôt: 92401276.8
(22) Date de dépôt: 07.05.1992
(51) Int. Cl.: G07D 7/00, G06K 19/06

(54) **Procédé de codage d'un fil de sécurité, notamment pour papier fiduciaire**
Verfahren zum Kodieren eines Sicherheitsdrahtes, insbesondere für Bankpapier
Method for coding a security thread, especially for security paper

(30) Priorité: 10.05.1991 FR 9105685
(43) Date de publication de la demande: 11.11.1992
(73) Titulaire: BANQUE DE FRANCE, F-75001 Paris (FR)
(72) Inventeur: Perron, Maurice, F-78220 Viroflay (FR); Fremy, Jean-Claude, F-77500 Chelles (FR); Veyssiere, Danièle, F-92200 Neuilly Sur Seine (FR)
(74) Mandataire: Martin, Jean-Jacques

(56) Documents cités:
- WO-A-90/08367
- FR-A- 2 087 845
- GB-A- 2 098 768
- US-A- 3 783 245

## Description

La présente invention concerne d'une façon générale le codage de fils tels que fils magnétiques pour l'authentification de papier de sécurité tel que du papier fiduciaire.

On connait déjà depuis longtemps, en particulier par le brevet GB-A-1 127 043, le principe du codage d'un fil magnétique, le fil étant incorporé à un billet de banque ou analogue. Un tel codage consiste à effectuer sur le fil une répartition judicieuse de matière magnétique ou magnétisable, de telle sorte que des moyens de lecture et de traitement permettent de dériver de cette répartition une information.

On connaît en outre, notamment par le document WO-A-90/08367, un procédé de codage particulier d'un tel fil. Plus précisément, ce document enseigne un codage d'informations numériques binaires dans lequel la présence de matière magnétique ou magnétisable sur une longueur donnée du fil indique un premier niveau logique, par exemple un "1", tandis que l'absence de matière magnétique ou magnétisable sur une autre longueur donnée de fil, typiquement identique à la première, signifie un second niveau logique, par exemple un "0".

Un tel codage peut s'avérer difficile à lire, notamment lorsque le code comporte une succession importante de bits à "0" ou à "1", car il n'est alors pas possible pour le moyen de lecture de se resynchroniser sur chaque début de bit.

En pratique, un codage de ce type n'est utilisable qu'avec des machines de lecture de code dans lesquelles la vitesse relative de la tête de lecture et du papier incorporant le fil de sécurité est fixe et bien déterminée. Et il exclut pratiquement une lecture "à la volée" à l'aide d'un crayon lecteur à tête magnétique ou analogue.

Par ailleurs, un codage de ce type connu peut conduire à l'existence sur le fil de zones magnétiques étendues (cas d'une succession de bits à "1"), ce qui complique la fabrication et accroit le risque de fausses lectures comme on le verra plus loin.

On connaît également par WO-A-9008367 un procédé de codage selon le préambule de la revendication 1.

Toutefois, ce procédé connu n'est pas à même de résoudre les problèmes de fabrication et de fiabilité de la lecture tels que mentionnés ci-dessus.

La présente invention vise à pallier ces inconvénients de la technique antérieure et notamment à proposer un procédé de codage qui offre une bonne fiabilité de lecture même dans des conditions difficiles.

Elle permet de coder une information qui peut être représentative de la valeur faciale d'un billet de banque, de sa date de fabrication, de son numéro de série, etc.

Elle concerne à cet effet, selon un premier aspect, un procédé de codage d'un fil de sécurité pour papier fiduciaire ou analogue ayant les particularités de la revendication 1.

Des aspects préférés, mais non limitatifs de ce procédé sont exposés dans les sous-revendications 2 et 3.

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 illustre un premier type de codage selon la présente invention,
la figure 2 illustre une forme concrète de fil de sécurité basée sur le codage de la figure 1,
la figure 3 illustre un billet de banque incorporant un fil codé selon l'invention.

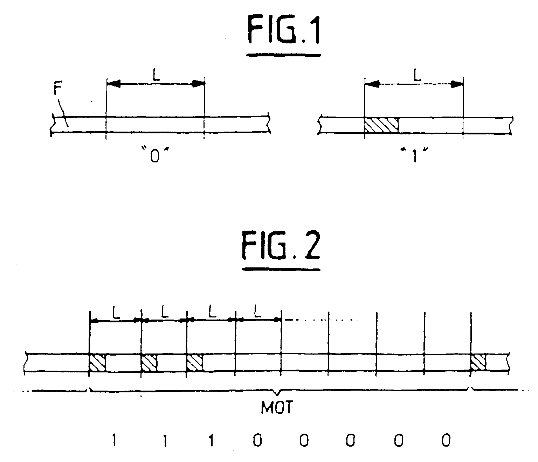

En référence tout d'abord à la figure 1, on a représenté un codage binaire élémentaire selon l'invention. Sur cette figure et sur toutes celles qui suivent, les zones hachurées représentent des zones de présence de matière magnétique ou magnétisable, tandis que les zones blanches indiquent l'absence de matière magnétisable.

Selon ce codage élémentaire, chaque segment d'information élémentaire occupe une longueur déterminée L du fil magnétique F. Un "0" est représenté par l'absence de matière sur toute la longueur L, tandis qu'un "1" est représenté par la présence de matière sur un premier tiers de la longueur L, les deuxième et troisième tiers étant dépourvus de matière.

Ainsi un "1" correspond à un rapport cyclique de 33% entre la longueur de la zone où la matière magnétique est présente et la longueur totale du segment, tandis qu'un "0" correspond à un rapport cyclique nul. Bien entendu, la convention inverse pourrait être adoptée. On notera ici que, dans tout le présent mémoire, on entend par "rapport cyclique" le rapport entre la longueur d'une zone active du code (en l'espèce une zone comportant une substance magnétique ou magnétisable) et la longueur totale du segment contenant cette zone active. Un rapport cyclique peut donc prendre une valeur comprise entre 0 et 100%.

Avantageusement, un mot constitué par une pluralité de bits ainsi codés peut être encadré par des segments de début et de fin, ou par des segments délimiteurs, appropriés. Ces segments ont pour objet essentiel, outre la délimitation des mots, de permettre la synchronisation de la lecture sur la longueur L des bits, et ce quelle que soit la vitesse de passage du papier devant le système de lecture.

On a représenté sur la figure 2 un exemple de codage d'identification de valeurs faciales de billets de banque.

Dans cet exemple, chaque mot, par exemple un mot de huit segments de longueur L, comporte une première partie constituée d'une succession de M "1", et une seconde partie constituée d'une succession de N "0", avec M+N=8. Dans ce cas, non seulement le codage des segments individuels, mais également le codage d'un mot entier, met en jeu un rapport cyclique variable. Ainsi chaque mot peut adopter huit états différents, avec un rapport cyclique entre le nombre de segments à "1" et le nombre total de segments du mot variant ici entre 0% et 100% par pas de 12,5%.

Un tel codage selon la présente invention est particulièrement avantageux en ce que le décodage, dans une unité de traitement située en aval des moyens de lecture, peut être réalisé d'une manière extrêmement simple avec des moyens intégrateurs appropriés. En outre, étant donné la structure même de chaque mot, aucun segment de début ou de fin, ou délimiteur, n'est nécessaire. En outre, la lecture peut se faire indifféremment sans un sens ou dans l'autre.

Bien entendu, toute autre forme de mot peut être employée.

Notamment, le codage des segments élémentaires tel que décrit plus haut peut être mis à profit pour encoder dans le fil magnétique des informations telles que des codes normalisés ASCII, ce qui autorise l'encodage d'une large variété d'informations. On peut également effectuer l'encodage d'informations conformément au format de certains codes-à-barres, et notamment du code-à-barres dit "MSI", basé sur les variations du rapport cyclique entre des zones pleines et des zones vides. De préférence, le choix est dirigé vers des codes dits auto-correcteurs d'erreurs.

On peut citer ici un avantage de l'invention. On a observé expérimentalement que, lorsqu'un fil ou un film de sécurité était revêtu d'encre magnétique ou magnétisable sur une zone étendue, il existait des risques importants de cassure ou de fissuration de l'encre une fois séchée, avec en corollaire un risque d'arrachement de l'encre et donc de lecture erronée du fil de sécurité. Au contraire, étant donné que les codages de la présente invention n'impliquent jamais l'existence de zones magnétiques étendues, ce risque est minimisé.

Quel que soit le codage utilisé, la réalisation de fils à magnétisation discontinue et leur incorporation à un papier fiduciaire peuvent faire appel à des techniques connues en elles-mêmes.

Par exemple, les zones magnétiques peuvent être obtenues par impression d'une encre magnétique sur un film non magnétique. Un matériau particulièrement approprié pour le film est le polyester, coloré ou non selon que l'on souhaite ou non masquer l'impression. Dans un premier cas, on peut découper le film en bandes très étroites, assimilées à des fils, que l'on peut noyer dans l'épaisseur du papier. Alternativement, des bandes découpées dans le film peuvent être transférées sur la surface du papier, par exemple selon une technique classique de transfert à chaud. On peut encore utiliser un vernis détachable, transférable par la même technique.

Pour l'impression, on utilise avantageusement la technique de la sérigraphie ou de l'héliogravure. En pratique, avec ces techniques, la longueur des segments élémentaires d'information peut être avantageusement comprise entre 1 et quelques millimètres. Bien entendu, des longueurs plus courtes peuvent aussi être obtenues.

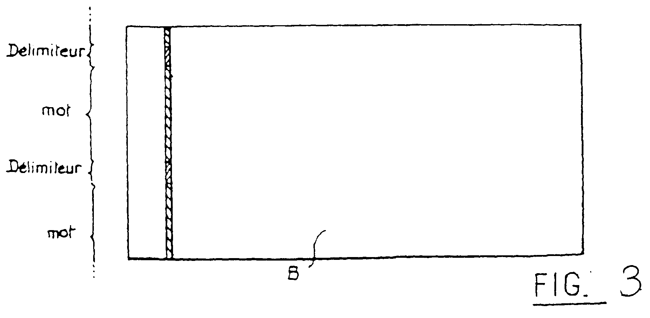

Afin d'assurer que chaque document, notamment billet de banque, comporte au moins un mot entier et ses éventuels délimiteurs dans leur continuité ou, dans le cas du codage d'une signature analogique, au moins le codage d'une ou de plusieurs ondes entières de celle-ci, on prévoit avantageusement qu'une longueur de fil incorporée au document soit égale au supérieure au double de la longueur du mot ou de l'onde codée, selon les cas. Ainsi on a illustré sur la figure 3 un billet de banque B de forme rectangulaire incorporant, parallèlement et à proximité de l'un de ses petits bords, un fil ou ruban codé selon l'invention dans lequel, quel que soit le décalage entre la position de l'information sur le fil et les bords du billet, on est sûr de trouver à chaque fois sur le billet un mot entier.

De préférence, la lecture du fil intégré à un papier fiduciaire s'effectue en magnétisant tout d'abord les zones magnétisables par passage au voisinage d'un aimant, puis par passage sous un capteur tel qu'un capteur à bobines, un capteur magnétorésistif ou un capteur à effet Hall.

Bien entendu, la présente invention n'est nullement limitée à la forme de réalisation décrite ci-dessus et représentée sur les dessins, mais l'homme de l'art saura y apporter toute variante ou modification.

Ainsi, bien que toute la description qui précède ait été faite en se référant à un codage par magnétisation/absence de magnétisation, l'invention s'applique avantageusement au codage avec des zones comportant une quelconque substance active ou activable et des zones dépourvues d'une telle substance. Dans le cas d'une substance activable, l'activation peut s'effectuer de toute manière appropriée, par exemple par application d'un champ d'ondes électromagnétiques.

On peut par exemple utiliser des substances ayant un comportement spécifique sous un rayonnement infrarouge ou ultraviolet, ou encore des substances de métallisation.

L'invention peut s'appliquer à l'authentification de toute sorte de papiers de sécurité, notamment pour billets de banque, chèques, etc... ainsi que de tous documents en matière plastique tels que cartes de crédit et analogues.

## Revendications

1. Procédé de codage d'un fil ou ruban de sécurité (F) pour papier fiduciaire ou analogue, dans lequel on applique sur le fil un mot codé composé d'une pluralité d'informations élémentaires constituées respectivement par une pluralité de segments ayant tous sensiblement même longueur, chaque mot comportant un nombre fixe de segments, procédé caractérisé en ce que l'information de chaque segment est déterminée par le rapport cyclique de la longueur d'une zone active ou activable du segment à la longueur totale dudit/segment, au moins l'un des rapports cycliques étant différent de 0% et différent de 100% et en ce que le nombre fixe de segments est constitué par une première succession (M) de segments ayant une première valeur d'information et une seconde succession (N) de segments ayant une seconde valeur d'information.

2. Procédé selon la revendication 1, caractérisé en ce que la zone active ou activable de chaque segment est une zone magnétique ou magnétisable.

3. Procédé selon la revendication 1 ou 2, caractérisé en ce que l'un des rapports cycliques a une valeur nulle.

## Claims

1. A method of encoding a security filament or tape (F) for banknote paper or the like, in which an encoded word is applied to the filament in the form of a plurality of information units respectively constituted by a plurality of segments all of substantially the same length, each word including a fixed number of segments, the method being characterized in that the information in each segment is determined by the duty ratio of the length of an active or activatable zone of the segment to the total length of said segment, at least one of the duty ratios being different from 0% and different from 100%, and in that the fixed number of segments is constituted by a first succession (M) of segments having a first information value and a second succession (N) of segments having a second information value.

2. A method according to claim 1, characterized in that the active or activatable zone of each segment is a magnetic or magnetizable zone.

3. A method according to claim 1 or 2, characterized in that one of the duty ratios has the value zero.

## Patentansprüche

1. Verfahren zum Kodieren eines Sicherheitsfadens bzw. -bandes (F) für Bankpapier oder dergleichen, in dem an den Faden ein kodiertes Wort angelegt wird, das aus einer Mehrzahl von elementaren Informationen besteht, die jeweils aus einer Mehrzahl von Segmenten bestehen, die alle im wesentlichen dieselbe Länge aufweisen, wobei jedes Wort eine feste Anzahl von Segmenten umfaßt, dadurch gekennzeichnet, daß die Information jedes Segments durch das zyklische Verhältnis der Länge einer aktiven bzw. aktivierbaren Zone des Segments zur Gesamtlänge des besagten Segments bestimmt ist, wobei mindestens eines der zyklischen Verhältnisse sich von 0% und 100% unterscheidet, und daß die feste Anzahl von Segmenten durch eine erste Folge (M) von Segmenten bestimmt ist, die einen ersten Informationswert aufweisen, und eine zweite Folge (N) von Segmenten, die einen zweiten Informationswert aufweisen, umfaßt.

2. Verfahren nach Anspruch 1, dadurch gekennzeichnet, daß die aktive bzw. aktivierbare Zone jedes Segments eine magnetische bzw. magnetisierbare Zone ist.

3. Verfahren nach Anspruch 1 oder 2, dadurch gekennzeichnet, daß eines der zyklischen Verhältnisse einen Wert Null aufweist.
